(19) Europäisches Patentamt
European Patent Office
Office européen des brevets

(11) **EP 4 760 268 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
***G01N 35/10*** *(2006.01)* ***G01F 23/26*** *(2022.01)*

(21) Application number: **24851648.6**

(52) Cooperative Patent Classification (CPC):
**G01F 23/26; G01N 35/10**

(22) Date of filing: **26.07.2024**

(86) International application number:
**PCT/JP2024/026894**

(87) International publication number:
**WO 2025/033223 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023131205**

(71) Applicant: **HITACHI HIGH-TECH CORPORATION
Tokyo 105-6409 (JP)**

(72) Inventors:
• **OSAKI Yutaro
Tokyo 105-6409 (JP)**
• **NAKANO Hiroki
Tokyo 105-6409 (JP)**
• **TANOUE Hidetsugu
Tokyo 105-6409 (JP)**

(74) Representative: **Strehl & Partner mbB
Maximilianstrasse 54
80538 München (DE)**

(54) **AUTOMATED ANALYSIS DEVICE**

(57)  An automatic analyzer is provided which is capable of detecting contact of a distal end of a probe with a liquid level even if capacitance between the container and the probe is excessively increased. The automatic analyzer for analyzing a sample includes: a container that contains liquid; a probe that aspirates the liquid; a capacitance measuring unit that outputs a voltage according to capacitance between the container and the probe; a determining unit that determines, based on the voltage output from the capacitance measuring unit, whether or not a distal end of the probe contacts the liquid; and a capacitor that is installed between the capacitance measuring unit and either the probe or the container.

FIG. 3

## Description

Technical Field

This invention relates to an automatic analyzer.

Background Art

An automatic analyzer for analyzing a sample, such as blood, urine or the like, provided by a patient uses a probe which is a small tube that aspirates liquid such as a reaction liquid resulting from a reaction of a sample and a reagent, and the like. The probe is also mounted with a liquid level detecting device that detects whether or not a distal end of the probe contacts the liquid level.

Patent Literature 1 discloses an automatic analyzer that includes a liquid level detecting device that, based on a voltage output according to capacitance between a probe and a container containing liquid, detects whether or not the distal end of the probe contacts the liquid level.

Citation List

Patent Literature

Patent Literature 1: Japanese Unexamined Patent Application Publication No. 2010-185796

Summary of Invention

Technical Problem

In Patent Literature 1, however, there is no consideration for capacitance excessively increased between the container and the probe. If the capacitance between the container and the probe is excessively increased due to formation of a double-layer capacitor and/or the like, a voltage value to be output may be decreased, so that a false detection that there is no contact may be made despite the contact of the distal end of the probe with the liquid level.

Accordingly, an object of the present invention is to provide an automatic analyzer that is capable of detecting that the distal end of a probe contacts a liquid level even if capacitance between the container and the probe is excessively increased.

Solution to Problem

To achieve the above object, the present invention provides an automatic analyzer for analyzing a sample, which includes: a container that contains liquid; a probe that aspirates the liquid; a capacitance measuring unit that outputs a voltage according to capacitance between the container and the probe; a determining unit that determines, based on the voltage output from the capacitance measuring unit, whether or not a distal end of the probe contacts the liquid; and a capacitor that is installed between the capacitance measuring unit and either the probe or the container.

Advantageous Effects of Invention

According to the present invention, it is possible to provide an automatic analyzer that is capable of detecting contact of a distal end of a probe with a liquid level even if capacitance between the container and the probe is excessively increased.

Brief Description of Drawings

Fig. 1 is a diagram illustrating an example of the overall configuration of an automatic analyzer.
Fig. 2 is diagrams illustrating, by way of example, a conventional configuration of a liquid level detecting device and an output voltage waveform of a capacitance measuring unit.
Fig. 3 is diagrams illustrating, by way of example, a configuration of the liquid level detecting device according to a first embodiment, and the output voltage waveform of the capacitance measuring unit.
Fig. 4 is a diagram illustrating another example of configuration of the liquid level detecting device according to the first embodiment.
Fig. 5 is a diagram illustrating still another example configuration of the liquid level detecting device according to the first embodiment.
Fig. 6 is a diagram illustrating another example of the overall configuration of the automatic analyzer. Description of Embodiments

Preferred embodiments of an automatic analyzer according to the present invention will be described below with reference to the accompanying drawings. It should be noted that, in a following description and accompanying drawings, same reference signs are used to indicated components having similar or same functional configurations and thus a repeated description is omitted.

First Embodiment

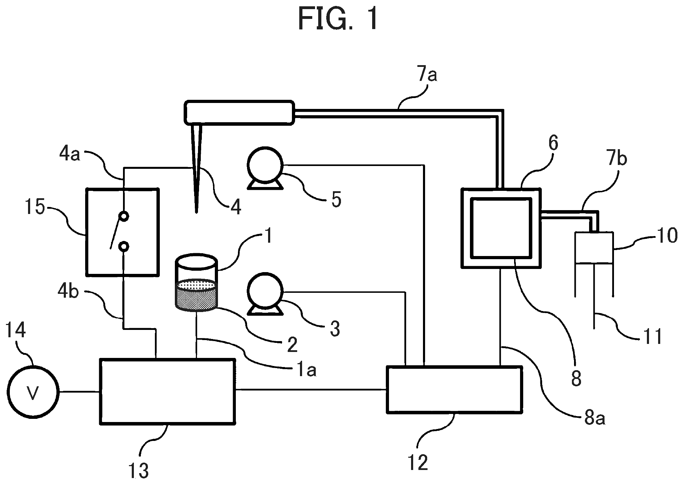

An example of an overall configuration of an automatic analyzer is described with reference to Fig. 1. The automatic analyzer is the apparatus for analyzing a sample, such as blood, urine or the like, provided by a patient, which includes a container 1, a probe 4, an analyzing unit 6, a control unit 12 and a liquid level detecting device 13. The following is a description of each portion.

The container 1 contains liquid 2 such as a reaction liquid resulting from a reaction of a sample and a reagent, and the like. The container 1 is electrically connected to the liquid level detecting device 13 through a transmission line 1a to function as one of electrodes of the liquid level detecting device 13. The container 1 is also horizontally and vertically moved by a container drive unit 3 that is controlled by the control unit 12.

The probe 4 is a narrow tube inserted into the liquid 2 contained in the container 1 to aspirate the liquid 2. The probe 4 is connected to a syringe 10 through a flow path 7a, the analyzing unit 6 and a flow path 7b so that the liquid 2 is aspirated by the operation of a piston 11 moving within the syringe 10. The operation of the piston 11 is controlled by the control unit 12. The probe 4 is also electrically connected to the liquid level detecting device 13 through a transmission line 4a, a switch 15 and a transmission line 4b, to function as one of electrodes of the liquid level detecting device 13. Turning the switch 15 on/off is controlled by the control unit 12. Further, the probe 4 is horizontally and vertically moved by a probe drive unit 5 that is controlled by the control unit 12.

The analyzing unit 6 analyzes the liquid 2 aspirated by the probe 4. In particular, the liquid 2 is introduced into between an electrode 8 detecting a predetermined ion and a reference electrode which is not shown. In this condition, a potential difference between both the electrodes is measured, and then ion concentrations in the liquid 2 is obtained from the measured potential difference. It is noted that the number of electrodes 8 is not limited to one, and a number of electrodes 8 are installed depends on the number of types of ions to be detected. The analysis result obtained by the analyzing unit 6, for example, the ion concentration, is output to the control unit 12 through a transmission line 8a.

The control unit 12 is a computer which controls the operation of each portion and stores and displays the analysis result at the analyzing unit 6.

The liquid level detecting device 13 operates by electric power supplied from a power supply 14, and, based on the voltage output according to capacitance between input terminals, detects whether or not the distal end of the probe 4, which is one of the electrodes, contacts the liquid level of the liquid 2. It is noted that, because noise may be mixed into the analysis result of the analyzing unit 6 by the operation of the liquid level detecting device 13, the switch 15 is turned off during the analysis of the analyzing unit 6 and thus the operation of the liquid level detecting device 13 may be stopped to prevent the mixing of noise.

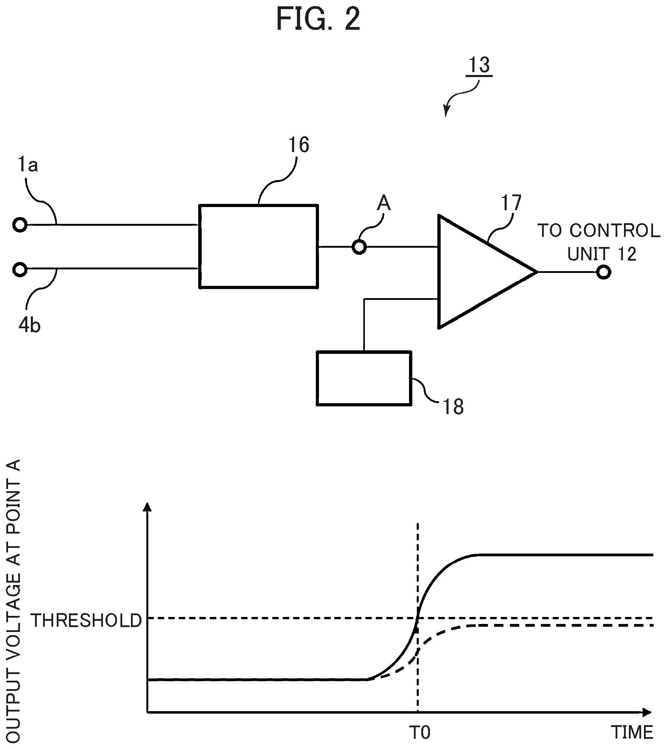

A conventional configuration of the liquid level detecting device 13 is described with reference to Fig. 2. The liquid level detecting device 13 has a capacitance measuring unit 16, a threshold storage unit 18, and a determining unit 17. The capacitance measuring unit 16 outputs a voltage according to capacitance between the transmission line 1a connected to the container 1 and the transmission line 4b which is connected to the probe 4 through the transmission line 4a and the switch 15. The threshold storage unit 18 stores a predetermined threshold value. The determining unit 17 performs a comparison between output voltage of the capacitance measuring unit 16 and a threshold value stored in the threshold storage unit 18, thereby determining whether or not the distal end of the probe 4 contacts the liquid level of the liquid 2, and then outputting the determination result to the control unit 12.

Specifically, the capacitance between the container 1 and the probe 4 changes according to a distance between the distal end of the probe 4 and the liquid level, so that, as the distal end of the probe 4 approaches the liquid level, the output voltage of the capacitance measuring unit 16 sharply increases. In the graph shown in a lower portion of Fig. 2, the solid line indicates an example of voltage waveform output from the capacitance measuring unit 16 when the probe 4 moves downward at a constant speed. It is noted that in the lower portion of Fig. 2, an intermediate value between the output voltage when the distal end of the probe 4 is located away from the liquid level and the output voltage when the distal end of the probe 4 contacted the liquid level is set as a threshold value. At time TO when voltage output from the capacitance measuring unit 16 reaches the threshold value in the threshold storage unit 18, the determining unit 17 determines that the distal end of the probe 4 contacts the liquid level of the liquid 2.

However, if the capacitance between the container 1 and the probe 4 is excessively increased due to formation of a double-layer capacitor and/or the like, the output voltage of the capacitance measuring unit 16 drops. In particular, as in a waveform shown by the dotted line of the graph of the lower portion of Fig. 2, despite the contact of the distal end of the probe 4 with the liquid level of the liquid 2, the output voltage of the capacitance measuring unit 16 may sometimes fall below the threshold value. If the output voltage of the capacitance measuring unit 16 falls below the threshold value, the determining unit 17 will not determine that the distal end of the probe 4 contacts the liquid level of the liquid 2, resulting in a false detection. Thus, in the first embodiment, the liquid level detecting device 13 is configured such that, even if the capacitance between the container 1 and the probe 4 is excessively increased, a reduction in voltage output from the capacitance measuring unit 16 can be inhibited.

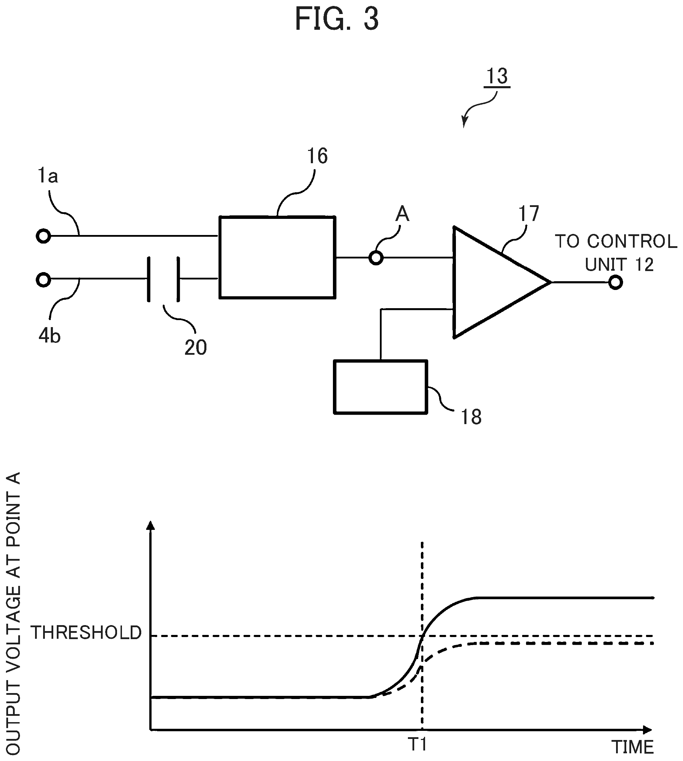

An example of a configuration of the liquid level detecting device 13 according to the first embodiment is described with reference to Fig. 3. The liquid level detecting device 13 according to the first embodiment has the capacitance measuring unit 16, the threshold storage unit 18 and the determining unit 17, and also has a capacitor 20 installed between the probe 4 and the capacitance measuring unit 16. Installing the capacitor 20 between the probe 4 and the capacitance measuring unit 16 causes a reduction in capacitance between input terminals of the capacitance measuring unit 16, so that the output voltage of the capacitance measuring unit 16 is improved. More specifically, where the capacitance between the container 1 and the probe 4 is Cp, and the capacitance of the capacitor 20 installed between the probe 4 and the capacitance measuring unit 16 is Co, the capacitance Cx between the input terminals of the capacitance measuring unit 16 is expressed by the following equation.

$$Cx = Co \cdot Cp / (Co + Cp) \ \dots \ (Eq. \ 1)$$

Cx obtained by Equation 1 is the product of $Co/(Co+Cp)$ and Cp, in which $Co/(Co+Cp)$ is less than one, and thus Cx is less than Cp. Specifically, installing the capacitor 20 results in a reduction in capacitance between the input terminals of the capacitance measuring unit 16.

In the graph in a lower portion of Fig. 3, as output voltage of the capacitance measuring unit 16, the dotted line indicates a waveform without the capacitor 20 and the solid line indicates a waveform with the capacitor 20. It is noted that the waveform shown by the dotted line in the graph in Fig. 3 is the same as the waveform shown by the dotted line in the graph in Fig. 2, which is also that when the capacitance between the container 1 and the probe 4 is excessively increased. Installing the capacitor 20 improves the output voltage of the capacitance measuring unit 16 to exceed the threshold value. Because of this, the determining unit 17 is able to determine that the distal end of the probe 4 contacts the liquid level of the liquid 2.

It is noted that the capacitance Co of the capacitor 20 preferably takes a value sufficiently smaller than the capacitance Cp between the container 1 and the probe 4, for example, Cp/1000 or lower. If Co is equal to or smaller than Cp/1000, then this enables Cx to take a sufficiently small value. Then, even when the capacitance between the container 1 and the probe 4 is excessively increased, a reduction in voltage output from the capacitance measuring unit 16 is able to be sufficiently inhibited. Also, the configuration of the liquid level detecting device 13 is not limited to that in Fig. 3.

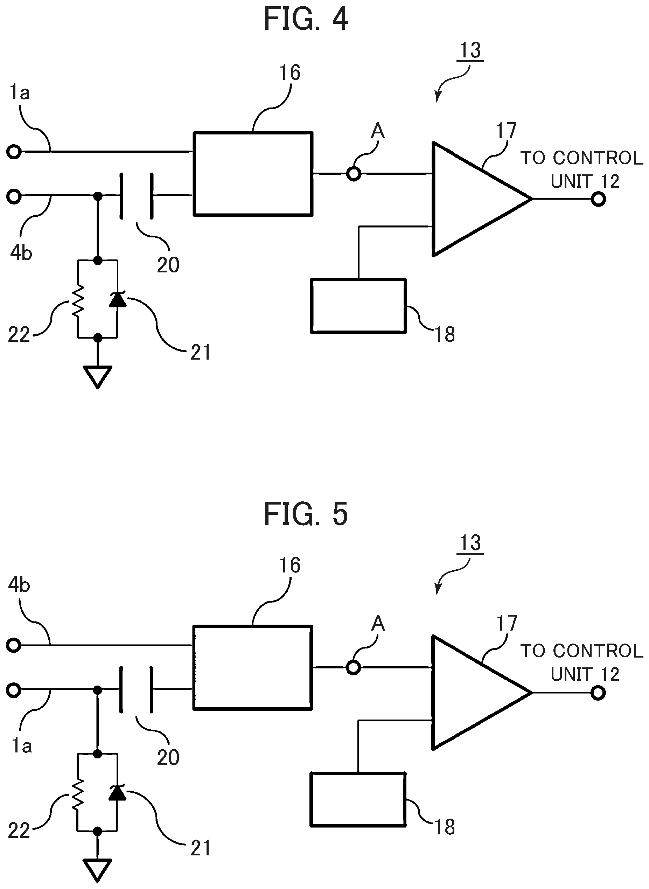

Another example of the configuration of the liquid level detecting device 13 according to the first embodiment is described with reference to Fig. 4. In the liquid level detecting device 13 illustrated in Fig. 4, a diode 21 and a resistance 22 are added to Fig. 3. The diode 21 and the resistance 22 are connected in parallel between the transmission line 4b connected to the capacitor 20 and the ground. The diode 21 is also installed such that the direction from the ground toward the transmission line 4b is the forward direction.

If the capacitor 20 is charged with foreign charge despite the conditions where the probe 4 is located away from the liquid level, a false detection that the distal end of the probe 4 contacts the liquid level of the liquid 2 may be possibly made. Addition of the diode 21 and the resistance 22 enables the foreign charge charged to the capacitor 20 to be discharged to the ground, which in turn enables prevention of a false detection of the liquid level.

Still another example of the configuration of the liquid level detecting device 13 according to the first embodiment is described with reference to Fig. 5. In the liquid level detecting device 13 illustrated in Fig. 5, the capacitor 20 is installed between the container 1 and the capacitance measuring unit 16, and the diode 21 and the resistance 22 are connected in parallel between the transmission line 1a connected to the capacitor 20 and the ground. It is noted that the diode 21 is installed such that the direction from the ground toward the transmission line 1a is the forward direction.

In the liquid level detecting device 13 illustrated in Fig. 5, by installing the capacitor 20 between the container 1 and the capacitance measuring unit 16, the output voltage of the capacitance measuring unit 16 is improved to exceed the threshold value. As a result, the determining unit 17 is able to determine that the distal end of the probe 4 contacts the liquid level of the liquid 2.

The diode 21 and the resistance 22 are also connected in parallel between the transmission line 1a and the ground, thereby enabling the foreign charge charged to the capacitor 20 to be discharged to the ground. Therefore, similarly to the liquid level detecting device 13 in Fig. 4, in the liquid level detecting device 13 illustrated in Fig. 5, a false detection of the liquid level is also able to be prevented.

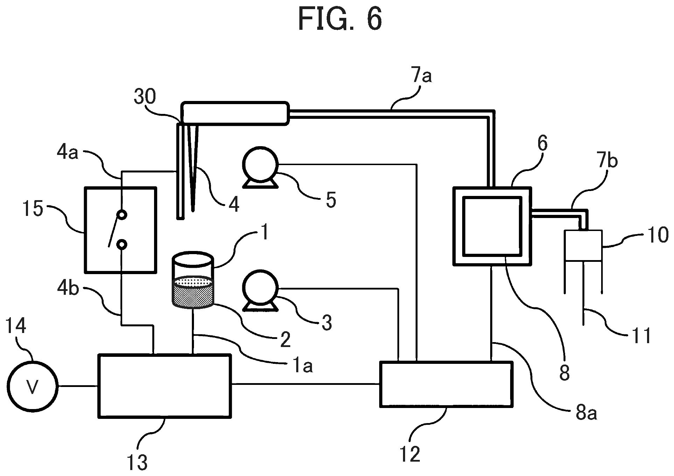

Another example of an overall configuration of the automatic analyzer is described with reference to Fig. 6. In Fig. 6, a sensor rod 30 is added to the automatic analyzer in Fig. 1. The sensor rod 30 is electrically connected to the liquid level detecting device 13 through the transmission line 4a, the switch 15 and the transmission line 4b, to function as one of electrodes of the liquid level detecting device 13. Specifically, in the automatic analyzer in Fig. 6, based on the voltage output according to the capacitance between the container 1 and the sensor rod 30, whether or not the distal end of the sensor rod 30 contacts the liquid level of the liquid 2 is able to be detected.

It is noted that the liquid level detecting device 13 has any one of the configurations in Fig. 3 to Fig. 5. Therefore, in the automatic analyzer illustrated in Fig. 6, even if the capacitance between the container 1 and the sensor rod 30 is excessively increased, a reduction in voltage output from the capacitance measuring unit 16 may be sufficiently inhibited. In the case of the liquid level detecting device 13 shown in Fig. 4 or Fig. 5, if the capacitor 20 is charged with foreign charge under the conditions where the sensor rod 30 is located away from the liquid level, the foreign charge may be discharged to the ground. As a result, prevention of a false detection of the liquid level may be enabled.

The sensor rod 30 is also placed parallel to the probe 4 in proximity to the probe 4, and installed such that the distal end of the sensor rod 30 is located closer to the liquid level than the distal end of the probe 4. By locating the distal end of the sensor rod 30 closer to the liquid level than the distal end of the probe 4, the downward movement of the probe 4 is able to be stopped before the distal end of the probe 4 contacts the liquid level, enabling fine adjustment of depth at which the probe 4 is inserted into the liquid 2.

Embodiments according to the present invention have been described above. The present invention is not limited to the above embodiments, and variations may be made to components without departing from the gist of the invention. Further, a plurality of components disclosed in the above embodiments may be used in combination as appropriate. Furthermore, any number of components of all the components shown in the above embodiments may be deleted.

List of Reference Signs

1: container
1a: transmission line
2: liquid
3: container drive unit
4: probe
4a: transmission line
4b: transmission line
5: probe drive unit
6: analyzing unit
7a: flow path
7b: flow path
8: electrode
8a: transmission line
10: syringe
11: piston
12: control unit
13: liquid level detecting device
14: power supply
15: switch
16: capacitance measuring unit
17: determining unit
18: threshold storage unit
20: capacitor
21: diode
22: resistance
30: sensor rod

**Claims**

1. An automatic analyzer for analyzing a sample, comprising:

    a container that contains liquid;
    a probe that aspirates the liquid;
    a capacitance measuring unit that outputs a voltage according to capacitance between the container and the probe; a determining unit that determines, based on the voltage output from the capacitance measuring unit, whether or not a distal end of the probe contacts the liquid; and
    a capacitor that is installed between the capacitance measuring unit and either the probe or the container.

2. The automatic analyzer according to claim 1, wherein
capacitance of the capacitor is equal to or less than Cp/1000, where capacitance between the container and the probe is Cp.

3. The automatic analyzer according to claim 1, wherein
a diode and resistance are connected in parallel between a ground and a transmission line connected to the capacitor, and the diode has a direction from the ground toward the transmission line as a forward direction.

4. An automatic analyzer for analyzing a sample, comprising:

    a container that contains liquid;
    a probe that aspirates the liquid;
    a sensor rod that is placed parallel to the probe in proximity to the probe;
    a capacitance measuring unit that outputs a voltage according to capacitance between the container and the sensor rod;
    a determining unit that determines, based on the voltage output from the capacitance measuring unit, whether or not a distal end of the sensor rod contacts the liquid; and
    a capacitor that is installed between the capacitance measuring unit and either the sensor rod or the container.

5. The automatic analyzer according to claim 4, wherein
the distal end of the sensor rod is located closer to a liquid level of the liquid than the distal end of the probe.

**Amended claims under Art. 19.1 PCT**

1. (amended) An automatic analyzer for analyzing a sample, comprising:

    a container that contains liquid;
    a probe that aspirates the liquid;
    a capacitance measuring unit that outputs a voltage according to capacitance between the container and the probe;
    a determining unit that determines, based on the voltage output from the capacitance measuring unit, whether or not a distal end of the probe contacts the liquid; and
    a capacitor that is installed between the capacitance measuring unit and either the probe or the container,

wherein
capacitance of the capacitor is equal to or less than $Cp/1000$, where capacitance between the container and the probe is Cp.

2. (deleted)

3. The automatic analyzer according to claim 1, wherein
a diode and resistance are connected in parallel between a ground and a transmission line connected to the capacitor, and the diode has a direction from the ground toward the transmission line as a forward direction.

4. (amended) An automatic analyzer for analyzing a sample, comprising:

> a container that contains liquid;
> a probe that aspirates the liquid;
> a sensor rod that is placed parallel to the probe in proximity to the probe;
> a capacitance measuring unit that outputs a voltage according to capacitance between the container and the sensor rod;
> a determining unit that determines, based on the voltage output from the capacitance measuring unit, whether or not a distal end of the sensor rod contacts the liquid; and
> a capacitor that is installed between the capacitance measuring unit and either the sensor rod or the container, wherein
> the distal end of the sensor rod is located closer to a liquid level of the liquid than the distal end of the probe.

5. (deleted)

**Statement under Art. 19.1 PCT**

1. Claim 1 is amended based on the description of claim 2.
2. Claim 2 is deleted in association with the amendment to claim 1.
3. Claim 4 is amended based on the description of claim 5.
4. Claim 5 is deleted in association with the amendment to claim 4.

FIG. 1

# FIG. 2

# FIG. 3

# FIG. 4

16

<u>13</u>

1a

17

A

TO CONTROL
UNIT 12

4b

20

22

21

18

# FIG. 5

16

<u>13</u>

4b

17

A

TO CONTROL
UNIT 12

1a

20

22

21

18

# FIG. 6

## INTERNATIONAL SEARCH REPORT

| International application No. |
|---|
| **PCT/JP2024/026894** |

**A. CLASSIFICATION OF SUBJECT MATTER**

*G01N 35/10*(2006.01)i; *G01F 23/26*(2022.01)i
FI: G01N35/10 C; G01F23/26 Z

According to International Patent Classification (IPC) or to both national classification and IPC

**B. FIELDS SEARCHED**

Minimum documentation searched (classification system followed by classification symbols)

G01N35/10; G01F23/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2010-185796 A (HITACHI HIGH-TECHNOLOGIES CORPORATION) 26 August 2010 (2010-08-26) | 1 |
| | paragraphs [0014]-[0023] | |
| A | | 2-5 |
| Y | WO 2016/155943 A1 (KONINKLIJKE PHILIPS N.V.) 06 October 2016 (2016-10-06) | 1, 4 |
| | column 6, lines 23-24, column 8, lines 17-19, column 11, line 21 - column 12, line 2, fig. 3 | |
| A | | 2-3, 5 |
| Y | JP 2009-250751 A (OLYMPUS CORPORATION) 29 October 2009 (2009-10-29) | 4 |
| | paragraphs [0012]-[0014], [0026]-[0034], fig. 3 | |
| A | | 5 |
| A | JP 2007-159362 A (FUNAI ELECTRIC CO., LTD.) 21 June 2007 (2007-06-21) | 2 |
| | entire text | |

☐ Further documents are listed in the continuation of Box C.   ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/026894**

| Patent document cited in search report | | | Publication date (day/month/year) | Patent family member(s) | Publication date (day/month/year) |
|---|---|---|---|---|---|
| JP | 2010-185796 | A | 26 August 2010 | US 2012/0121465 A1 paragraphs [0022]-[0031] | |
| WO | 2016/155943 | A1 | 06 October 2016 | (Family: none) | |
| JP | 2009-250751 | A | 29 October 2009 | (Family: none) | |
| JP | 2007-159362 | A | 21 June 2007 | US 2007/0133138 A1 entire text | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010185796 A